# EUROPÄISCHE PATENTSCHRIFT

(11) **EP 2 569 498 B1**
(45) Veröffentlichungstag und Bekanntmachung des Hinweises auf die Patenterteilung: **12.02.2020**
(21) Anmeldenummer: 11719537.0
(22) Anmeldetag: 10.05.2011
(51) Int. Cl.: E05B 85/10

(54) **GRIFFVORRICHTUNG INSBESONDERE FÜR EIN FAHRZEUG**
GRIP DEVICE, IN PARTICULAR FOR A VEHICLE
DISPOSITIF À POIGNÉE, EN PARTICULIER POUR UN VÉHICULE

(30) Priorität: 10.05.2010 DE 102010016869
(43) Veröffentlichungstag der Anmeldung: 20.03.2013
(73) Patentinhaber: Huf Hülsbeck & Fürst GmbH & Co. KG, 42551 Velbert (DE)
(72) Erfinder: MÜLLER, Dirk, 45359 Essen (DE); BECK, Andreas, 44795 Bochum (DE)
(74) Vertreter: Bals, Rüdiger
(86) Internationale Anmeldenummer: PCT/EP2011/057562
(87) Internationale Veröffentlichungsnummer: WO 2011/141485

(56) Entgegenhaltungen:
- EP-A1- 0 072 537
- WO-A1-2011/086144
- DE-A1- 19 731 325
- DE-A1-102008 019 335
- DE-C1- 4 002 963
- JP-U- 58 121 958
- US-A- 2 599 054

## Beschreibung

Die vorliegende Erfindung ist auf eine Griffvorrichtung für eine Schließvorrichtung für ein bewegliches Teil, wie eine Tür, Klappe oder dergleichen, eines Fahrzeuges gemäß dem Oberbegriff von Anspruch 1 gerichtet. Dabei weist diese Griffvorrichtung ein Griffteil auf, das selbst zu dem beweglichen Teil beweglich gelagert ist, und wobei die Schließvorrichtung über ein Verbindungselement mit dem Griffteil verbindbar ist und das Griffteil zur Betätigung der Schließvorrichtung dient. Somit ist es möglich, das bewegliche Teil zu Öffnen oder zu Schließen, in dem die Griffvorrichtung benutzt wird, die wiederum auf die Schließvorrichtung wirkt. Ferner ist die Erfindung auch auf ein Verfahren zum Betätigen einer Griffvorrichtung für eine Schließvorrichtung für ein bewegliches Teil, wie eine Tür, Klappe oder dergleichen, eines Fahrzeuges gemäß dem Oberbegriff von Anspruch 10 gerichtet.

Gattungsgemäße Griffvorrichtungen sind zahlreich aus dem Stand der Technik bekannt. So offenbart z. B. die Druckschrift DE 10 2005 046 119 A1 eine Griffvorrichtung mit einem beweglichen Griffteil für ein Fahrzeug, wobei es sich bei dem beweglichen Griffteil um einen Ziehgriff handelt. Üblicherweise wird dieses Griffteil bei einer Bedienung der Schließvorrichtung bewegt, z. B. durch eine Drehung oder Schwenkbewegung, um mechanisch oder elektromechanisch auf die Schließvorrichtung einzuwirken, die das bewegliche Teil verschließt oder freigibt. Diese Griffvorrichtungen weisen einen relativ tiefen Aufbau auf, für den ein entsprechendes Platzangebot im beweglichen Teil vorhanden sein muss. Außerdem ragt auch das Griffteil relativ weit aus einer Außenseite des beweglichen Teils hervor, wodurch die Aerodynamik eines Fahrzeuges leidet und auch die Unfallgefahr mit Fußgängern vergrößert wird.

Eine ähnliche Griffvorrichtung geht auch aus der Druckschrift DE 10 2006 023 634 A1 hervor, bei der ebenfalls ein Ziehgriff als Griffteil ausgebildet ist, wobei der Bediener des Griffteils zwischen dem Griffteil und der Außenseite des beweglichen Teils durchgreifen muss, um das Griffteil von dem beweglichen Teil herauszuziehen, wodurch eine Entriegelung des Schließvorrichtung ermöglicht wird. Auch diese Griffvorrichtung ragt mit dem Griffteil, welches als Ziehgriff ausgestaltet ist, deutlich aus der Außenseite des beweglichen Teils hervor. Auch die Druckschrift DE 197 31 325 A offenbart eine gattungsgemäße Griffvorrichtung.

Es ist somit Aufgabe der vorliegenden Erfindung, eine Griffvorrichtung für eine Schließvorrichtung für ein bewegliches Teil, wie eine Tür, Klappe oder dergleichen, bei einem Fahrzeug bereitzustellen bzw. ein Verfahren zum Betätigen dieser Griffvorrichtung bereitzustellen, wobei die Griffvorrichtung über ein platzsparenden Aufbau mit geringer Tiefe verfügt und trotzdem eine komfortable Bedienung ermöglicht. Zusätzlich ist es eine Aufgabe der Erfindung, bei einer derartigen Griffvorrichtung die Aerodynamik zu verbessern und die Unfallgefahr, insbesondere für Fußgänger, zu reduzieren.

Die zuvor genannte Aufgabe wird durch eine Griffvorrichtung mit den Merkmalen aus dem Anspruch 1, insbesondere mit dem Merkmal aus dem kennzeichnenden Teil, gelöst. In den abhängigen Vorrichtungsansprüchen sind bevorzugte Ausgestaltungen der erfindungsgemäßen Griffvorrichtung aufgeführt. Ebenfalls wird zur Lösung der oben genannten Aufgabe ein Verfahren gemäß des Anspruches 10, insbesondere mit den Merkmalen aus dem kennzeichnenden Teil, vorgeschlagen. Ferner sind in den abhängigen Verfahrensansprüchen ebenfalls bevorzugte Varianten des Verfahrens beschrieben.

Es sei an dieser Stelle bereits erwähnt, dass sämtliche Merkmale aus der erfindungsgemäßen Griffvorrichtung auch bei dem erfindungsgemäßen Verfahren zum Betätigen einer Griffvorrichtung zum Einsatz kommen können. Ebenfalls können auch die Merkmale aus dem erfindungsgemäßen Verfahren bei der erfindungsgemäßen Griffvorrichtung zum Einsatz kommen. Somit sind im Sinne dieser Anmeldung sämtliche Merkmale von der erfindungsgemäßen Vorrichtung auf das erfindungsgemäße Verfahren und umgekehrt übertragbar.

Die erfindungsgemäße Griffvorrichtung weist ein Griffteil auf, das zu dem beweglichen Teil beweglich gelagert ist. Somit kann das Griffteil schwenkbar und/oder drehbar zum beweglichen Teil angeordnet sein, wobei das bewegliche Teil selbst eine Tür, Klappe, Motorhaube oder dergleichen von einem Fahrzeug darstellen kann. Dieses bewegliche Teil wird durch die Schließvorrichtung verschlossen oder freigegeben, je nach Stellung, wodurch das bewegliche Teil selber geöffnet oder geschlossen werden kann. Die Schließvorrichtung ist selbst über ein Verbindungselement mit dem Griffteil der Griffvorrichtung verbindbar und das Griffteil dient zur Betätigung der Schließvorrichtung. Erfindungsgemäß ist es vorgesehen, dass das Griffteil zumindest zweiteilig aufgebaut ist, wobei ein erster Teil direkt oder indirekt an dem beweglichen Teil gelagert ist und ein zweites Teil beweglich an dem ersten Teil angeordnet ist, welches ein Bedienteil zur Bedienung der Griffvorrichtung bildet. Somit ist das Griffteil selbst nicht starr ausgestaltet sondern weist zwei zueinander relativ bewegbare Teile auf. Damit ist es möglich, eine besonders platzsparende Griffvorrichtung zu erhalten, da das Griffteil selbst sehr flach ausgestaltet werden kann und nicht störend aus dem beweglichen Teil, insbesondere einer Außenseite, herausragen muss. Auch innerhalb des beweglichen Teils ist der Platzbedarf deutlich geringer, da für die Tiefe der Griffvorrichtung und des Griffteils weniger Platz beansprucht wird. Die erfindungsgemäße Griffvorrichtung wird im folgenden Text immer im montierten Zustand beschrieben.

Bei der erfindungsgemäßen Griffvorrichtung kann es ferner vorgesehen sein, dass das erste Teil des Griffteils über eine Griffhalterung an dem beweglichen Teil gelagert ist. Die Griffhalterung selbst dient somit zur Aufnahme und Lagerung des Griffteils. Üblicherweise wird die gesamte Griffvorrichtung über die Griffhalterung, insbesondere starr, an dem beweglichen Teil befestigt, wobei die Griffhalterung im Wesentlichen an einer Innenseite des beweglichen Teils angeordnet ist. Das erste Teil des Griffteils kann einen Drehpunkt und/oder eine Führung zur Griffhalterung aufweisen, wodurch die Bewegung zwischen dem Griffteil und dem beweglichen Teil erreichbar ist. Es ist vorgesehen, dass das zweite Teil einen Drehpunkt mit dem ersten Teil aufweist, wodurch das zweite Teil relativ zum ersten Teil beweglich ist. Auch ist es denkbar, dass das zweite Teil schwenkbar und nicht nur drehbar zum ersten Teil ausgestaltet ist. In diesem Fall ist kein fester Drehpunkt sondern eine Führungsbahn zwischen dem zweiten Teil und dem ersten Teil des Griffteils vorhanden. Am zweiten Teil ist ein Mitnehmer vorhanden, der z. B. nockenartig aus dem zweiten Teil des Griffteils herausragt, womit das zweite Teil mechanisch auf das Verbindungselement einwirkt. Folglich wird das Verbindungselement direkt oder indirekt durch das zweite Teil vom Griffteil betätigt. Das Verbindungselement selbst kann aus einem Bowdenzug, einer Zug- oder Druckstange oder einem sonstigen mechanischen Element bestehen. Auch ist es denkbar, dass das Verbindungselement aus einer elektrischen Leitung besteht, wobei das zweite Teil des Griffteils über ein elektrisches Bauteil, z. B. einem Schalter, Taster, Sensor oder dergleichen, ein Steuersignal über das Verbindungselement zur Schließvorrichtung sendet.

Des Weiteren kann es vorgesehen sein, dass ein mechanisches oder elektrisches Betätigungselement zwischen dem Verbindungselement und dem zweiten Teil des Griffteils angeordnet ist. Hierbei kann insbesondere der Mitnehmer vom zweiten Teil mechanisch auf das Betätigungselement einwirken. Das mechanische Betätigungselement selbst kann als Hebel ausgestaltet sein, der drehbar oder schwenkbar, insbesondere an der Griffhalterung, gelagert ist. Folglich wird die vom Mitnehmer stammende Bewegung für das Betätigungselement genutzt, um diese von dem Betätigungselement auf das Verbindungselement zu übertragen. Ein elektrisches Betätigungselement kann eine mechanische Bewegung in ein elektrisches Signal umwandeln, wobei das elektrische Betätigungselement selbst als das zuvor genannte, elektrische Bauteil zwischen dem Griffteil und dem Verbindungselement ausgestaltet sein kann.

Erfindungsgemäß weist das Verfahren eine Griffvorrichtung mit einem Griffteil auf, wobei das Griffteil zumindest eine Ruhestellung Ia und eine Betriebsstellung Ib aufweist, wobei das Griffteil am oder im beweglichen Teil in der Ruhestellung la an einem ersten Anschlag lagert und insbesondere mit seinem zweiten Teil, dem Bedienteil, im Wesentlichen flächenbündig zu einer Außenseite des beweglichen Teils angeordnet ist. Hierbei kann das Griffteil in der Betriebsstellung Ib mit seinem zweiten Teil aus der Außenseite des beweglichen Teils ragen, und das bewegliche Teil durch eine Betätigung der Schließvorrichtung geöffnet werden. Diese Ausgestaltung der Griffvorrichtung weist den Vorteil auf, dass das Griffteil in der Ruhestellung la im beweglichen Teil anordbar ist, so dass das Griffteil in der Ruhestellung la im Wesentlichen nicht aus der Außenseite des beweglichen Teils herausragt. Somit kann eine besonders gute Aerodynamik für ein Fahrzeug erzeugt werden. Auch können sich keine Fußgänger an diesem Griffteil dieser Griffvorrichtung verletzen, da er eben flächenbündig zur Außenseite des beweglichen Teils angeordnet ist. Damit stellt das flächenbündige Griffteil eine besonders vorteilhafte Variante der erfindungsgemäßen Griffvorrichtung dar.

Des Weiteren kann bei der erfindungsgemäßen Griffvorrichtung vorgesehen sein, dass das Griffteil zumindest zwei Betriebsstellungen Ib und Ic aufweist, wobei in einer ersten Betriebsstellung Ib das zweite Teil, insbesondere parallel zur Außenseite des beweglichen Teils steht, und wobei das zweite Teil in einer zweiten Betriebsstellung Ic insbesondere schräg zur Außenseite des beweglichen Teils steht, in der auf das Verbindungselement einwirkbar ist. Anders als im genannten Stand der Technik weist somit die erfindungsgemäße Griffvorrichtung zwei unterschiedliche Betriebszustände Ib, Ic für das Griffteil auf, wobei die erste Betriebsstellung Ib (Bereitschaftsstellung) vergleichbar zu einem herkömmlichen Türgriff aus dem Stand der Technik ist. Die eigentliche Betätigung der Schließvorrichtung erfolgt durch den Wechsel des Griffteils von der ersten Betriebsstellung Ib auf die zweite Betriebsstellung Ic (Betätigungsstellung). Hierbei wirkt das Griffteil, insbesondere mit dem zweiten Teil, direkt oder indirekt über ein Betätigungselement auf das Verbindungselement, welches in Kontakt mit der Schließvorrichtung steht.

Optional kann es vorgesehen sein, dass eine insbesondere U-förmige Führung beispielsweise an der Griffhalterung für das Griffteil oder dem beweglichen Teil selbst vorgesehen ist, die (gemeint ist die Führung) mit einem Führungsnocken am zweiten Teil mechanisch zusammenwirkt, womit das zweite Teil beim Wechsel zwischen der Ruhestellung la und der Betriebsstellung Ib, Ic relativ zum ersten Teil bewegbar ist. Auf diese Art und Weise lässt sich besonders elegant die gewünschte Relativbewegung zwischen dem ersten Teil und dem zweiten Teil erzeugen. Zweckmäßigerweise ist die insbesondere U-förmige Führung Bestandteil der Griffhalterung. Somit kann das Griffteil nicht nur über einen Drehpunkt mit der Griffhalterung gelagert werden, sondern zusätzlich durch die (insbesondere U-förmige) Führung. Diese Führung kann mit dem ersten und/oder dem zweiten Teil des Griffteils mechanisch zusammenwirken. Wo hingegen der zuvor genannte Drehpunkt nur zwischen dem ersten Teil und der Griffhalterung vorgesehen ist. Auch kann der erwähnte Führungsnocken am zweiten Teil des Griffteils gleichzeitig den Mitnehmer für das Betätigungselement darstellen. Somit kommt dem Führungsnocken bzw. dem Mitnehmer am zweiten Teil eine doppelte Funktion zu, nämlich die Führungsfunktion mit der Führung von der Griffhalterung und die Betätigungsfunktion mit dem Betätigungselement.

Ebenfalls ist es denkbar, dass das Betätigungselement an der Griffhalterung, insbesondere an der Führung für das zweite Teil des Griffteils, gelagert ist, und dass insbesondere der Mitnehmer vom zweiten Teil des Griffteils über das Betätigungselement auf das Verbindungselement wirkt. Hierbei kann das Betätigungselement hebelartig ausgestaltet sein. Das Betätigungselement selbst kann einen Drehpunkt zur insbesondere U-förmigen Führung aufweisen, die zur Griffhalterung gehört. Auch ist es denkbar, dass das Betätigungselement direkt an dem beweglichen Teil dreh- und/oder schwenkbar gelagert ist. Um die (Einbau-)Tiefe der Griffvorrichtung möglichst gering auszugestalten, ist es denkbar, dass das Betätigungselement im Wesentlichen oder vollständig ober- oder unterhalb der Führung angeordnet ist und nicht in der Tiefe über das Griffteil herausragt.

Des Weiteren ist es möglich, dass ein Aktivierungselement vorgesehen ist, womit das Griffteil mechanisch oder elektromechanisch von seiner Ruhestellung la in seine Betriebsstellung Ib überführbar ist. Zweckmäßigerweise ist dieses Aktivierungselement ebenfalls flächenbündig an dem beweglichen Teil angeordnet. Hierbei ist das Aktivierungselement beispielsweise über die Griffhalterung mit der übrigen Griffvorrichtung verbunden. Sofern ein mechanisches Aktivierungselement für das Griffteil zum Einsatz kommt, kann das Griffteil durch das Aktivierungselement mechanisch ein-/ oder ausgefahren werden. Hierzu kann von dem Aktivierungselement ein Gestänge, ein Bowdenzug oder dergleichen zum Griffteil geführt werden, womit das Griffteil zwischen seiner Ruhestellung la und seiner Betriebsstellung Ib bewegbar ist. Auch kann es optional vorgesehen sein, dass ein Antrieb, insbesondere in Form eine Elektromotors, Stellmotor oder dergleichen, für das Griffteil vorgesehen ist, womit dieses automatisch zwischen der Ruhestellung la und der Betriebsstellung Ib bewegbar ist, wobei insbesondere der Antrieb über das Aktivierungselement elektrisch ansteuerbar ist. Auch ist eine Kombination aus einer rein mechanischen und elektromechanischen Bewegung des Griffteils bei einem Wechsel von der Ruhestellung la und der Betriebsstellung Ib denkbar. So kann z. B. eine Feder eine Zug- oder Druckkraft auf das Griffteil ausüben, womit das Griffteil selbst bewegt werden kann. Die umgekehrte Richtung gegen die Federkraft kann z. B. rein mechanisch durch den Bediener der Griffvorrichtung oder durch den bereits erwähnten Antrieb erfolgen. Ebenfalls kann der Antrieb auch den Wechsel von der Ruhestellung la in die Betriebsstellung Ib verursachen und umgekehrt. Die zuvor genannte Feder für das Griffteil kann mit dem ersten und/oder dem zweiten Teil des Griffteils sowie der Griffhalterung zusammenwirken. Eine zusätzliche Feder ist zwischen dem ersten und dem zweiten Teil des Griffteils vorhanden, womit bewirkt werden kann, dass der Führungsnocken vom zweiten Teil stets in Kontakt mit einer Flanke, vorzugsweise einer linken Flanke, der U-förmigen Führung in der Griffhalterung steht. Die Mitte zwischen den beiden Flanken der U-förmigen Führung kann als Anschlag für das Griffteil in der Ruhestellung la dienen.

Die insbesondere U-förmige Führung weist eine linke Flanke und eine rechte Flanke auf, zwischen denen der Führungsnocken bzw. Mitnehmer vom zweiten Teil des Griffteils formschlüssig geführt werden kann. Damit der Mitnehmer direkt oder indirekt über das Betätigungselement auf das Verbindungselement mechanisch wirken kann, ist beispielsweise die rechte Flanke der U-förmigen Führung kürzer ausgestaltet als die linke Flanke. In der Betriebsstellung Ib wird der entsprechende Führungsnocken bzw. Mitnehmer vom zweiten Teil des Griffteils durch die kürzer ausgestaltete rechte Flanke aus der Führung freigeben, wodurch der Führungsnocken bzw. Mitnehmer einer Bewegung des zweiten Teils des Griffteils folgen kann, wenn dieser von der ersten Betriebsstellung Ib in die zweite Betriebsstellung Ic überführt wird. Bei dieser Bewegung wirkt der Mitnehmer bzw. der Führungsnocken direkt oder indirekt über das Betätigungselement auf das Verbindungselement, um die Schließvorrichtung zu betätigen. Der Mitnehmer bzw. der Führungsnocken kann mit einer drehbar gelagerten Rolle versehen sein, um die Reibung zur Führung zu minimieren. Ferner ist es denkbar, dass die zuvor erwähnte Führung nur eine Führungsflanke (rechte oder linke) aufweist, die mit dem Führungsnocken bzw. Mitnehmer mechanisch zusammenwirkt.

Ebenfalls ist es vorstellbar, dass das Betätigungselement durch eine Feder belastet ist, wobei diese Feder eine Kraft in entgegengesetzter Richtung zur Betätigung des Verbindungselements auf das Betätigungselement ausübt. Folglich kann die Feder an dem Betätigungselement zur selbstständigen Rückstellung des Betätigungselementes dienen, wenn dieses das Verbindungselement betätigt hat. Diese Feder kann zwischen dem Betätigungselement und der Griffhalterung vorgesehen sein.

Des Weiteren kann bei der erfindungsgemäßen Griffvorrichtung optional eine Sperreinheit vorhanden sein, wodurch das Griffteil in der Ruhestellung la blockiert ist, und wobei die Sperreinheit, insbesondere über das Aktivierungselement, betätigbar ist. Durch diese zusätzliche Sperreinheit ist es möglich, dass die erfindungsgemäße Griffvorrichtung immer in einer Arretierungslage IIa verweilt, wenn sich das Griffteil in seiner Ruhestellung la befindet. Somit kann auf eine weitere Crashsperre für einen Seitenaufprall oder sonstige einwirkenden Kräfte verzichtet werden, da die Sperreinheit grundsätzlich die Griffvorrichtung in der Ruhestellung la arretiert. Durch eine Betätigung des Aktivierungselementes kann die Sperreinheit von ihrer Arretierungslage in eine Freigabelage IIb überführt werden, in der das Griffteil vollständig bewegbar ist. Die Sperreinheit kann selbst ein Gestänge aufweisen, welches form- und/oder kraftschlüssig auf das Griffteil, insbesondere das erste und/oder das zweite Teil, einwirkt. Auch ist es denkbar, dass die Sperreinheit mit dem Führungsnocken bzw. dem Mitnehmer vom zweiten Teil des Griffteils kraft- und/oder formschlüssig zusammenwirkt.

Ferner kann die Sperreinheit auch elektromechanisch betätigt werden, wobei in diesem Fall das Aktivierungselement nur ein Steuersignal für einen entsprechenden Antrieb der Sperreinheit liefern muss.

Des Weiteren kann es vorgesehen sein, dass im Griffteil eine Elektronikeinheit vorgesehen ist, die insbesondere mit einem Sicherheitssystem am Fahrzeug verbindbar ist und/oder insbesondere ein Leuchtmittel aufweist. Bei dem Sicherheitssystem kann es sich um ein Active oder Passiv Keyless-Entry-System, ein Schließsystem oder dergleichen handeln, die elektrisch mit der Elektronikeinheit im Griffteil kommuniziert. Die Elektronikeinheit kann auch einen Näherungssensor oder dergleichen aufweisen, womit die Annäherung oder die Bedienung eines Bedieners messtechnisch erfassbar ist. Auch kann die Elektronikeinheit ein Leuchtmittel aufweisen, womit eine Vorfeldbeleuchtung denkbar ist. Zu diesem Zweck kann in dem Griffteil, insbesondere dem zweiten Teil, eine durchsichtige Blende angeordnet sein, durch die die Lichtstrahlen von dem Leuchtmitteln durchdringen können, um den Bereich ums Fahrzeug zumindest teilweise auszuleuchten.

Ferner ist die Erfindung auch auf ein Verfahren gemäß dem Anspruch 10 gerichtet. Das erfindungsgemäße Verfahren dient zum Betätigen einer Griffvorrichtung für eine Schließvorrichtung für ein bewegliches Teil, wie eine Tür, Klappe oder dergleichen, eines Fahrzeuges mit einem Griffteil, das zu dem beweglichen Teil selbst beweglich gelagert ist, wobei die Schließvorrichtung über ein Verbindungselement mit dem Griffteil verbunden ist und das Griffteil zur Betätigung der Schließvorrichtung dient, und das Griffteil zumindest eine Ruhestellung la und eine Betriebsstellung Ib aufweist, wobei das Griffteil mit seinem Bedienteil in der Ruhestellung la im Wesentlichen flächenbündig zu einer Außenseite des beweglichen Teils angeordnet ist und in eine Betriebsstellung Ib überführt wird, wenn eine Aktivierung der Griffvorrichtung, insbesondere über ein Aktivierungselement, erfolgt, wobei das Griffteil in der Betriebsstellung Ib mit dem Bedienteil aus der Außenseite des beweglichen Teils ragt. Hierbei ist es erfindungsgemäße vorgesehen, dass das Bedienteil (des Griffteils) bei einem Wechsel zwischen der Ruhestellung la und der Betriebsstellung Ib im Wesentlichen parallel zur Außenseite des beweglichen Teils geführt wird. Der Vorteil bei diesem erfindungsgemäßen Verfahren ist darin zu sehen, dass das Griffteil in der Ruhestellung la aerodynamisch an dem beweglichen Teil angeordnet ist und keine Verletzungsgefahr für Fußgänger besteht. Auch in der Betriebsstellung Ib ist die Verletzungsgefahr für einen Bediener der Griffvorrichtung besonders gering, da ein scherenförmiges Einklemmen von Fingern des Bedieners bei einer Betätigung des Griffteils mehr oder weniger ausgeschlossen ist, da dieses nicht schrägt sondern parallel zur Außenseite des beweglichen Teils geführt wird. Der Wechsel zwischen der Ruhestellung la und der Betriebsstellung Ib kann den Übergang von der Ruhestellung la in die Betriebsstellung Ib und/oder umgekehrt betreffen.

Ferner ist bei dem erfindungsgemäßen Verfahren vorgesehen, dass das Griffteil zumindest zweiteilig aufgebaut ist, wobei ein erstes Teil direkt oder indirekt, insbesondere über eine Griffhalterung, an dem beweglichen Teil gelagert ist und ein zweites Teil beweglich an dem ersten Teil angeordnet ist, welches das Bedienteil zur Bedienung der Griffvorrichtung bildet, und dass bei einem Wechsel zwischen der Ruhestellung la und der Betriebsstellung Ib beide Teile, nämlich das erste und das zweite Teil des Griffteils, flexibel voneinander bewegt werden. Somit ist eine Relativbewegung zwischen dem ersten und dem zweiten Teil des Griffteils realisierbar, wodurch sich eine Verletzungsgefahr für einen Bediener der Griffvorrichtung reduzieren lässt und ein wirksamer Einklemmschutz vorhanden ist.

Auch kann es bei dem erfindungsgemäßen Verfahren vorgesehen sein, dass das erste Teil des Griffteils über eine Griffhalterung an dem beweglichen Teil gelagert ist und einen Drehpunkt zur Griffhalterung aufweist. Dabei kann eine Führung für das Bedienteil vorgesehen sein, die insbesondere an der Griffhalterung angeordnet ist, wobei die (insbesondere U-förmig) Führung bei einem Wechsel zwischen der Ruhestellung la und der Betriebsstellung Ib die Bewegung des Bedienteils vorgibt.

Auch kann es bei dem Verfahren optional vorgesehen sein, dass das Griffteil zumindest zwei Betriebsstellungen Ib, Ic aufweist, wobei in einer ersten Betriebsstellung Ib das Bedienteil parallel zur Außenseite des beweglichen Teils steht, und wobei das Bedienteil in einer zweiten Betriebsstellung Ic schräg zur Außenseite des beweglichen Teils steht, in der auf das Verbindungselement eingewirkt wird, und dass insbesondere nur bei einem Wechsel zwischen der ersten Betriebsstellung Ib und der zweiten Betriebsstellung Ic das Bedienteil bewegt wird. Folglich bleibt bei dem zuletzt genannten Wechsel zwischen der ersten Betriebsstellung Ib und der zweiten Betriebsstellung Ic der erste Teil des Griffteils stehen. Hierfür kann ein zweiter Anschlag an der Griffhalterung vorgesehen sein, wodurch das erste Griffteil in der ersten Betriebsstellung Ib gehalten ist.

Es sei nochmal an dieser Stelle erwähnt, dass das erfindungsgemäße Verfahren auch mit der erfindungsgemäßen Griffvorrichtung durchgeführt werden kann. Auch kann die erfindungsgemäße Griffvorrichtung zur Durchführung des erfindungsgemäßen Verfahrens dienen.

Weitere vorteilhafte Maßnahmen und Merkmale der Erfindung ergeben sich aus der folgenden Beschreibung sowie den abgebildeten Figuren. In den Figuren ist die Erfindung in mehreren Ausführungsbeispielen dargestellt. Es zeigen:
- Fig. 1: schematischer Querschnitt durch eine erfindungsgemäße Griffvorrichtung in einer Ruhestellung la mit einer Sperreinheit in einer Arretierungslage IIa,
- Fig. 2: schematischer Querschnitt durch eine ähnliche Griffvorrichtung aus Fig. 1 in einer Zwischenstellung und mit einer Sperreinheit in einer Freigabelage IIb,
- Fig. 3: schematischer Querschnitt durch eine weitere erfindungsgemäße Griffvorrichtung in einer ersten Betriebsstellung Ib (Bereitschaftsstellung),
- Fig. 4: schematischer Querschnitt durch die Griffvorrichtung aus Fig. 3 in einer zweiten Betriebsstellung Ic (Betätigungssstellung) und
- Fig. 5: Draufsicht auf eine erfindungsgemäße Griffvorrichtung in einem beweglichen Teil in der Ruhestellung la.

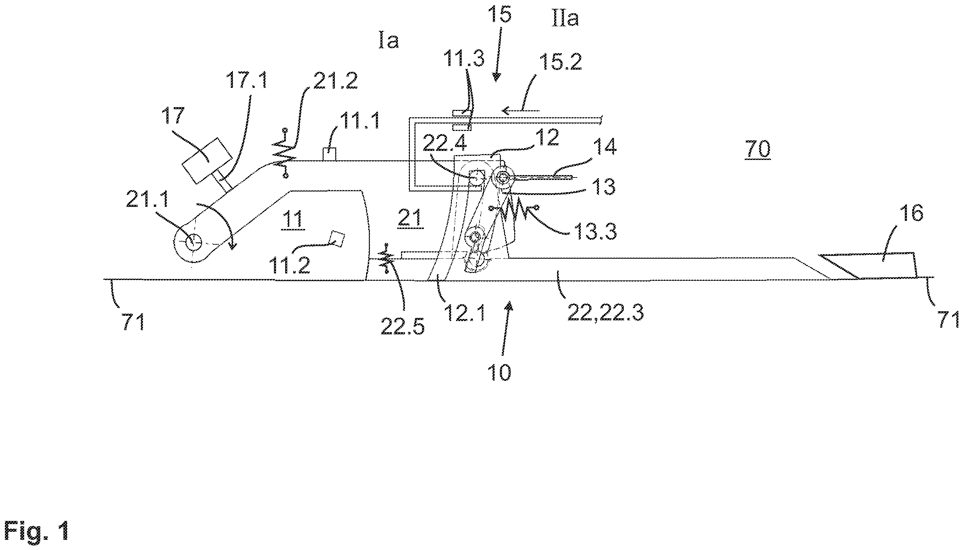

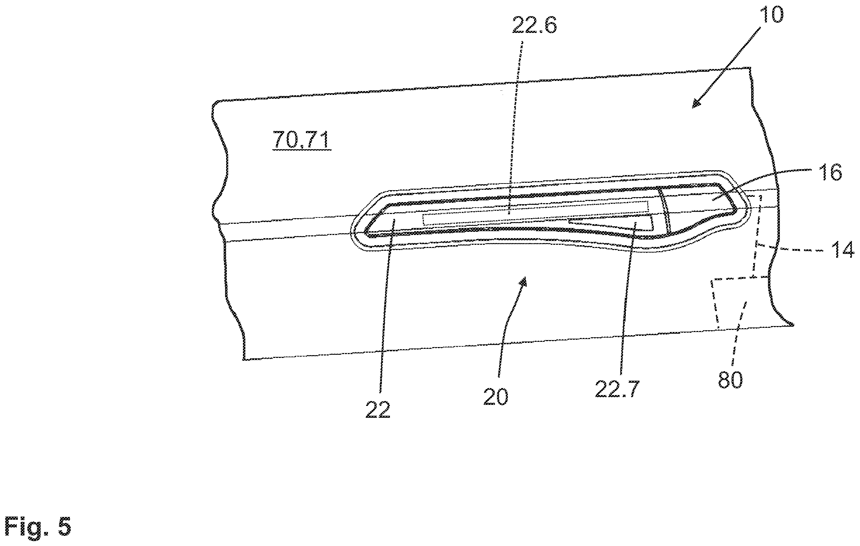

In der Fig. 1 ist schematisch ein Querschnitt durch die erfindungsgemäße Griffvorrichtung 10 in der Ruhestellung la dargestellt. Die Griffvorrichtung 10 ist über eine Griffhalterung 11 mit dem beweglichen Teil 70 von einem Fahrzeug befestigt. Das bewegliche Teil 70 kann selbst eine Tür, Klappe, Motorhaube oder dergleichen darstellen. Dieses bewegliche Teil 70 wird über eine Schließvorrichtung 80 verschlossen. Um das bewegliche Teil 70 öffnen zu können, muss die Schließvorrichtung 80 das bewegliche Teil 70 freigeben, wobei es durch die Griffvorrichtung 10 betätigt werden muss. In der Fig. 5 ist eine derartige Schließvorrichtung 80 angedeutet, die über ein Verbindungselement 14 mit der Griffvorrichtung 10 verbunden ist.

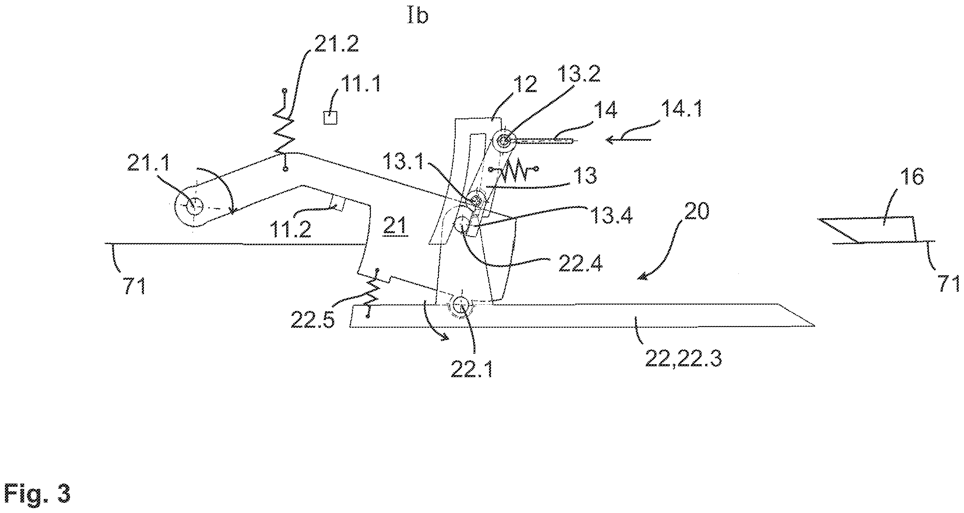

Wie aus der Fig. 1 weiter zu erkennen ist, ragt ein Griffteil 20 der Griffvorrichtung 10 in der Ruhestellung la nicht aus einer Außenseite 71 des beweglichen Teils 70 heraus, sondern ist vielmehr flächenbündig zur Außenseite 71 angeordnet. In dieser Ruhestellung la ist das Griffteil 20 mehr oder weniger unerreichbar für einen Bediener. Damit jedoch eine Betätigung der Griffvorrichtung 10 möglich wird, ist beispielsweise ein Aktivierungselement 16 vorgesehen, welches neben dem Griffteil 20 in dessen Verlängerung vorgesehen ist. Durch das Aktivierungselement 16 kann das Griffteil 20 von seiner Ruhestellung la in seine erste Betriebsstellung Ib (Bereitschaftsstellung) überführt werden. Diese Betriebsstellung Ib ist in Fig. 3 dargestellt. Wie der Fig. 1 weiter zu entnehmen ist, ist das Griffteil 20 zweiteilig aufgebaut, nämlich aus einem ersten Teil 21 und einem zweiten Teil 22, wobei das zweite Teil 22 über eine Drehverbindung mit einem Drehpunkt 22.1 mit dem ersten Teil 21 verbunden ist. Das erste Teil 21 weist einen Drehpunkt 21.1 zur Griffhalterung 11 auf, womit es an dieser drehbar gelagert ist. Damit das Griffteil 20 eine definierte Ruhestellung la innehat, ist zusätzlich ein erster Anschlag 11.1 an der Griffhalterung 11 vorgesehen, der mit dem ersten Teil 21 mechanisch zusammenwirkt. Für die Betriebsstellung Ib des Griffteils 20 ist ein zweiter Anschlag 11.2 an der Griffhalterung 11 vorgesehen, der ebenfalls mit dem ersten Teil 21 des Griffteils 20 zusammenwirkt. Somit kann das erste Teil 21 nicht über den zweiten Anschlag 11.2 hinausgedreht werden.

Im vorliegenden Fall ist an dem ersten Teil 21 das zweite Teil 22 drehbar angeordnet und weist hierzu den Drehpunkt 22.1 auf. Das zweite Teil 22 ist im Wesentlichen T-förmig (oder auch nur L-förmig) ausgestaltet, wobei es ein Hauptteil 22.3 aufweist, welches bündig zur Außenseite 71 in der Ruhestellung la am beweglichen Teil 70 verweilt. Von dem Hauptteil 22.3 geht (fast senkrecht) ein hebeiförmiger Ansatz 22.2 ab, der ober- und/oder unterhalb vom ersten Teil 21 des Griffteils 20 angeordnet sein kann. Somit kann der hebelförmige Ansatz 22.2 das erste Teil 21 U-förmig umfassen. An der Verbindungsstelle zwischen dem Hauptteil 22.3 und dem hebelförmigen Ansatz 22.2 ist der Drehpunkt 22.1 vorgesehen. In der Ruhestellung la weist das T-förmig zweite Teil 22 eine weitere Kontaktstelle oder Anschlagstelle zum ersten Teil 21 auf, nämlich im Bereich einer Feder 22.5, die zwischen dem ersten Teil 21 und dem zweiten Teil 22 angeordnet ist. Dieser Bereich um die Feder 22.5 (links neben dem Drehpunkt 22.1) ist als Anschlagfläche am ersten Teil 21 und am zweiten Teil 22 ausgestaltet, um somit eine klar vordefinierte Ruhestellung la des Griffteils 20 zu erhalten.

Des Weiteren ist an der Griffvorrichtung 10 aus Fig. 1 eine Sperreinheit 15 vorgesehen, die sich in ihrer Arretierungslage IIa befindet und das Griffteil 20 gegen Unfallkräfte oder dergleichen blockiert. Die Sperreinheit 15 kann ebenfalls durch das Aktivierungselement 16 betätigt bzw. entriegelt werden, welches dazu vorgesehen ist, um das Griffteil 20 aus der Ruhestellung la in die erste Betriebsstellung Ib zu überführen. In der Fig. 1 ist das Aktivierungselement 16 ebenfalls flächenbündig zur Außenseite 71 des beweglichen Teils 70 angeordnet. Da die Sperreinheit 15 in der Arretierungslage IIa das Griffteil 20 arretiert, wirkt eine Wirkspitze 15.1 der Sperreinheit 15 auf das Griffteil 20 mechanisch ein. Im vorliegenden Fall wird ein Mitnehmer 22.4 am hebelförmigen Ansatz 22.3 des zweiten Teils 22 vom Griffteil 20 formschlüssig in einer U-förmigen Führung 12 durch die Wirkspitze 15.1 der Sperreinheit 15 blockiert. Erst wenn die Sperreinheit 15 den Formschluss zwischen der Wirkspitze 15.1 und dem Mitnehmer 22.4 freigibt, ist eine Bewegung des Griffteils 20 möglich. Hierfür ist eine Verschiebung der Sperreinheit 15 in Richtung des Pfeils 15.2 erforderlich. Die Sperreinheit 15 kann selbst im Wesentlichen aus einer Stange bestehen oder einem bewegbaren Bolzen, der die Wirkspitze 15.1 bildet. Für eine stangenförmige Sperreinheit 15 kann eine Lagerung 11.3 an der Griffhalterung 11 vorgesehen sein, in der die Sperreinheit 15 längsverschieblich gelagert ist.

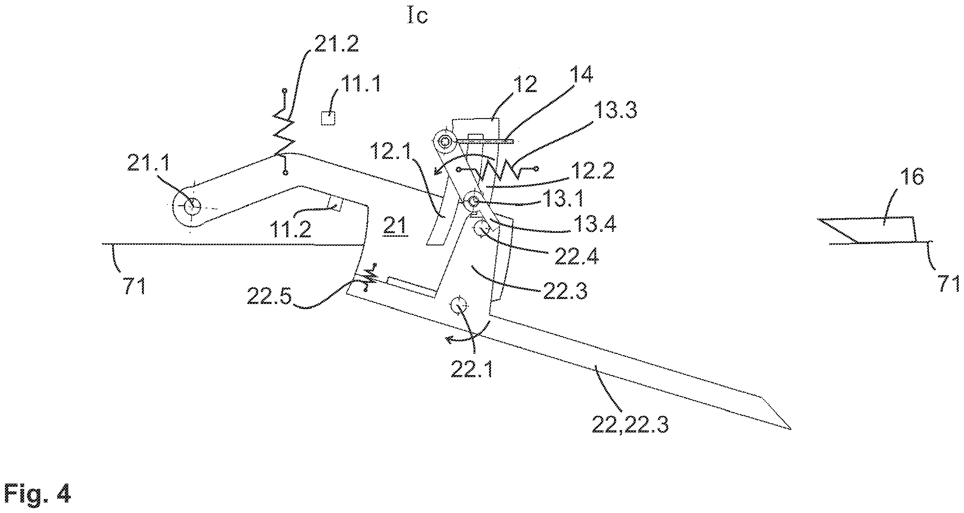

Wie gut aus den Figuren 1 bis 4 zu erkennen ist, weist die Griffvorrichtung 10 nur eine geringe (Einbau-)Tiefe auf, so dass diese nur einen geringen Platzbedarf benötigt, wie z. B. an sehr dünnen Stellen des beweglichen Teils 70 vorhanden ist. Damit die flache Konstruktion der Griffvorrichtung 10 unterstützt wird, ist das vorhandene Betätigungselement 13 oberhalb des Griffteils 20 an der U-förmigen Führung 12 drehbar gelagert. Das Betätigungselement 13 ist hebelförmig ausgestaltet, wobei sich der Hebel um seinen Drehpunkt 13.1 dreht (s. Fig. 4). Es sei hier erwähnt, dass statt der U-förmigen Führung 12 auch nur eine rechte Führungsflanke 12.1 (oder linke Führungsflanke 12.2 je nach rechter oder linker Griffvorrichtung 10) vorgesehen sein kann, um das Griffteil 20 zu lagern.

Ferner ist optional in der Fig. 1 ein Antrieb 17 mit einer Antriebsstange 17.1 zur elektromechanischen Betätigung des Griffteils 20 dargestellt. Durch diesen Antrieb 17 ist es möglich, dass das Griffteil 20 automatisch zwischen seiner Ruhestellung la und seiner ersten Betriebsstellung Ib überführt werden kann. Zusätzlich ist eine Feder 21.2 denkbar, die einerseits am Griffteil 20, insbesondere dem ersten Teil 21, und der Griffhalterung 11 angreift. Auch diese Feder 21.2 kann für einen automatischen Wechsel zwischen der Ruhestellung la und der ersten Betriebsstellung Ib des Griffteils 20 sorgen.

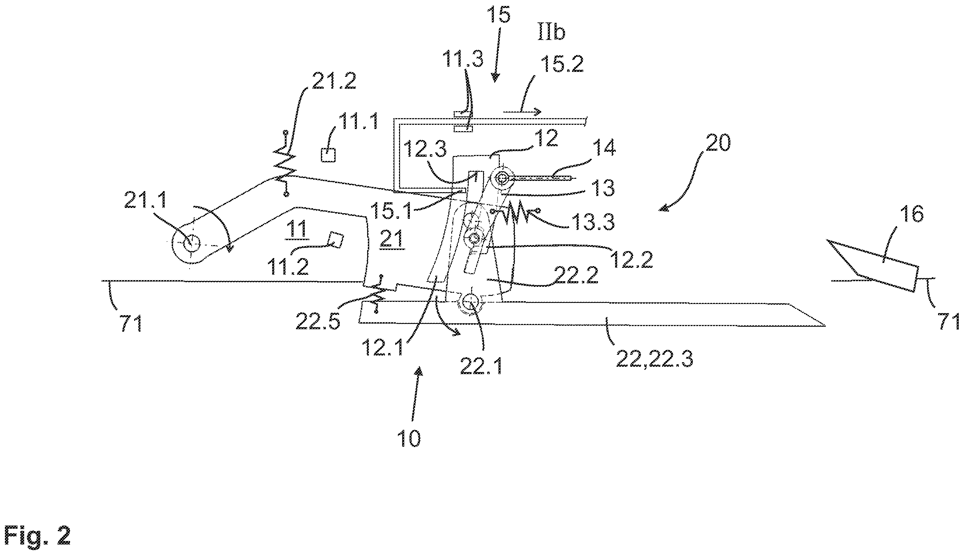

In der Fig. 2 ist eine sehr ähnliche Griffvorrichtung 10 aus der Fig. 1 schematisch im Querschnitt dargestellt. Bei dieser Griffvorrichtung 10 wurde auf den optionalen Antrieb 17 verzichtet. Das Griffteil 20 befindet sich in einer Zwischenstellung zwischen der Ruhestellung la und der ersten Betriebsstellung Ib. Folglich liegt es weder am ersten Anschlag 11.1 noch am zweiten Anschlag 11.2 der Griffhalterung 11 an. Allerdings ist deutlich zu erkennen, dass bereits eine Relativbewegung zwischen dem ersten Teil 21 und dem zweiten Teil 22 des Griffteils 22 erfolgt ist, da sich ein Spalt im Bereich der Feder 22.5 gebildet hat. Dieser Spalt bildet sich durch die relative Drehung des zweiten Teils 22 zum ersten Teil 21. Verursacht wird die Drehung durch das Zusammenwirken eines Führungsnockens 22.4 mit der U-förmigen Führung 12. Der Führungsnocken 22.4 dient gleichzeitig als Mitnehmer 22.4 für das Betätigungselement 13 und ist - wie bereits erwähnt - an dem hebelförmigen Ansatz 22.2 des zweiten Teils 22 vom Griffteil 20 angeordnet. Nachdem das Aktivierungselement 16 beispielsweise durch einen Druck vom Bediener betätigt wird, wird diese Drehbewegung zur Freigabe der Sperreinheit 15 genutzt, die in Richtung des Pfeils 15.1 aus Fig. 1 verschoben wird. In der Fig. 2 ist die Sperreinheit 15 in der Freigabelage IIb dargestellt. Hierbei ist der Formschluss zwischen der Wirkspitze 15.1 und dem Mitnehmer 22.4 vom zweiten Teil 22 aufgehoben, wodurch das Griffteil 20 freibeweglich ist in der Griffhalterung 11 gelagert ist. Ebenfalls kann der Druck auf das Aktivierungselement 16 genutzt werden, um eine Bewegung des Griffteils 20 zu erzeugen. Hierfür kann ein Gestänge oder dergleichen vorgesehen sein, welches jedoch in den Figuren nicht dargestellt ist. Durch dieses Gestänge oder die Feder 21.2 wird das erste Teil 21 des Griffteils 20 im Uhrzeigersinn um den Drehpunkt 21.1 gedreht. Durch diese Drehung wird gleichzeitig das zweite Teil 22 mitbewegt, wobei dieses zusätzlich durch die Führung 12 und den darin formschlüssig angeordneten Führungsnocken 22.4 um den Drehpunkt 22.1 im Gegenuhrzeigersinn zum ersten Teil 21 gedreht wird. Hierbei gleitet der Führungsnocken 22.4 ausgehend von einer Anschlagsmitte 12.3 in der U-förmigen Führung 12, insbesondere an der linken Flanke 12.1, entlang. Somit tritt das Griffteil 20 nicht schräg aus der Außenseite 71 des beweglichen Teils 70 heraus, sondern im Wesentlichen parallel zur Außenseite 71.

Sofern das Griffteil 20 wieder in die Ruhestellung la aus Fig. 1 überführt wird, muss die Sperreinheit 15 in Richtung des Pfeils 15.2 aus Fig. 2 bewegt werden, um eine Arretierung des Griffteils 20 zu bewirken.

In der Fig. 3 hat das Griffteil 20 seine erste Betriebstellung Ib erreicht und liegt mit dem ersten Teil 21 an dem zweiten Anschlag 11.2 an. Ebenfalls weist das zweite Teil 22 einen maximalen Drehwinkel zum ersten Teil 21 vom Griffteil 20 auf. Somit ist in der Figur 3 der maximale Spalt im Bereich der Feder 22.5 zwischen dem ersten Teil 21 und dem zweiten Teil 22 des Griffteils 20 dargestellt. Zur Erreichung der ersten Betriebsstellung Ib wurde das zweite Teil 22 weiter im Gegenuhrzeigersinn um den Drehpunkt 22.1 gedreht. Diese Drehung wird durch den Führungsnocken 22.4 vom zweiten Teil 22 in der Führung 12 bewirkt. Hierbei gleitet der Führungsnocken 22.4 im Wesentlichen an der linken Flanke 12.1 der Führung 12 entlang. Die Feder 22.5 zwischen dem ersten Teil 21 und dem zweiten Teil 22 des Griffteils 20 unterstützt das entlang Gleiten des Führungsnockens 22.4 an der linken Flanke 12.1 der U-förmigen Führung 12. Wie in der Fig. 3 weiter erkennbar ist, liegt der Führungsnocken 22.4 mehr oder weniger an der linken Flanke 12.1 an, wobei die rechte Flanke 12.2 auf dieser Höhe zu Ende ist, so dass ein Kontakt des Führungsnockens 22.4 mit der rechten Flanke 12.2 in der ersten Betriebsstellung Ib ausgeschlossen ist. Dass Aktivierungselement 16 kann in der ersten Betriebsstellung Ib wieder flächenbündig zur Außenseite 71 des beweglichen Teils 70 angeordnet sein, oder wie in Fig. 2 in der Bedienstellung verharren.

Wie in den Figuren 1 bis 3 zu erkennen ist, ist das Betätigungselement 13 stets in der gleichen Position dargestellt, da es bisher nicht durch die Bewegung des Griffteils 20 von der Ruhestellung la in die erste Betriebsstellung Ib bewegt oder verändert worden ist. Somit erfolgt in den Figuren 1 bis 3 auch keine Betätigung der Schließvorrichtung 80 über das Verbindungselement 14, welches im vorliegenden Fall als Bowdenzug oder Zugstange ausgestaltet ist. Die eigentliche Betätigung der Griffvorrichtung 10 erfolgt bei einem Wechsel des Griffteils 20 von der ersten Betriebsstellung Ib zur zweiten Betriebsstellung Ic (Betätigungsstellung). Hierbei übt das Verbindungselement 14 eine Zugkraft in Richtung des Bewegungspfeils 14.1 aus.

In der Fig. 4 ist nunmehr das Griffteil 20 in der zweiten Betriebsstellung Ic dargestellt, in der die Schließvorrichtung 80 über das Verbindungselement 14 betätigt wird. Dabei wirkt das Griffteil 20, insbesondere mit dem zweiten Teil 22 über das Betätigungselement 13 auf das Verbindungselement 14. Diese Zugkraft wird über das Verbindungselement 14 auf die Schließvorrichtung 80 übertragen. Wie in der Fig. 4 erkennbar ist, wurde das Betätigungselement 13 im Gegenuhrzeigersinn um seinen Drehpunkt 13.1 gedreht. Dabei sorgt eine Zugkraft von einem Bediener am zweiten Teil 22 des Griffteils 20 von der Außenseite 71 des beweglichen Teils 70 weg für eine Drehbewegung des zweiten Teils 22 im Uhrzeigersinn um den Drehpunkt 22.1 mit dem ersten Teil 21 vom Griffteil 20. Diese Drehbewegung führt dazu, dass der Führungsnocken 22.4 bzw. der Mitnehmer 22.4 am zweiten Teil 22 die linke Flanke 12.1 der Führung 12 verlässt und eine Druckkraft auf ein Betätigungsende 13.4 am Betätigungselement 13 ausübt, wodurch dieses im Gegenuhrzeigersinn um den entsprechenden Drehpunkt 13.1 gedreht wird. Hierdurch wird die gewünschte Zugkraft am Verbindungselement 14 erzeugt, welches am anderen Ende des Betätigungselementes 13, nämlich der Lagerstelle 13.2 für das Verbindungselement 14 angreift. Der Drehpunkt 13.1 des Betätigungselementes 13 liegt zwischen der Lagerstelle 13.2 für das Verbindungselement 14 und dem Betätigungsende 13.4 für den Mitnehmer 22.4. Zusätzlich ist eine Feder 13.3 vorgesehen, die einerseits an dem Betätigungselement 13 angreift und andererseits an der Griffhalterung 11. Diese Feder 13.3 dient zur selbstständigen Rückstellung des Betätigungselementes 13 aus den Figuren 1 bis 3. Außerdem kann durch die Feder 13.3 auch das Bedienteil 22 des Griffteils 20 wieder in die Betriebsstellung Ib überführt werden, wobei der Mitnehmer 22.4 wieder an der linken Flanke 12.1 der Führung 12 zu liegen kommt.

Wie in Fig. 4 unschwer zu erkennen ist, steht nunmehr das Bedienteil 22, welches durch das zweite Teil 22 vom Griffteil 20 gebildet wird, schräg zur Außenseite 71 des beweglichen Teils 70. In dieser zweiten Betriebsstellung Ic gibt die Schließvorrichtung 80 das bewegliche Teil 80 frei, wodurch dieses geöffnet werden kann, um z. B. durch die Tür in den Fahrgastraum bei einen Fahrzeug einzutreten. Der gesamte Wechsel der Griffeinheit 20 von der zweiten Betriebsstellung Ic zur Ruhestellung la kann durch die Feder 21.2 und/oder die Feder 13.3 erfolgen, wenn diese im vorliegenden Fall als Zugfedern ausgestaltet sind. Auch kann hierfür der Antrieb 17 aus Fig. 1 genutzt werden, sofern die Griffvorrichtung 10 elektromechanisch betätigbar ist.

In der Fig. 5 ist eine Draufsicht auf eine erfindungsgemäße Griffvorrichtung 10 dargestellt. Hierbei ist die Griffvorrichtung 10 flächenbündig mit der Außenseite 71 des beweglichen Teils 70 bzw. der Seitentür angeordnet. In dieser Draufsicht ist nur das Bedienteil 22 vom Griffteil 20 sichtbar. Das erste Teil 21 des Griffteils 20 befindet sich hinter dem Bedienteil 22 und ist nicht erkennbar. Bei dieser Griffvorrichtung 10 ist eine Elektronikeinheit 22.6 gestrichelt dargestellt, die unsichtbar am oder im ersten Teil 21 und/oder zweiten Teil 22 des Griffteils 20 angeordnet ist. Zusätzlich ist ein Leuchtmittel im Griffteil 20 vorgesehen, wobei die Lichtstrahlen durch eine Blende 22.7 am zweiten Teil 22 austreten können. Das Aktivierungselement 16 für die flächenbündige Griffvorrichtung 10 ist rechts neben dem Bedienteil 22 angeordnet und stellt eine Verlängerung hierzu dar. Ebenfalls ist gestrichelt das Verbindungselement 14 zwischen der Griffvorrichtung 10 und der Schließvorrichtung 80 dargestellt, die hinter der Außenseite 71 am beweglichen Teil 70 unsichtbar angeordnet sind.

### Bezugszeichenliste

- 10: Griffvorrichtung
- 11: Griffhalterung
- 11.1: erster Anschlag für 21 (Ruhestellung)
- 11.2: zweiter Anschlag für 22 (Betriebsstellung)
- 11.3: Lagerung für 15
- 12: Führung für 22, insbesondere U-förmig
- 12.1: linke Flanke
- 12.2: rechte Flanke
- 12.3: Anschlagmitte
- 13: Betätigungselement / Hebel
- 13.1: Drehpunkt von 13
- 13.2: Lagerstelle für 14
- 13.3: Feder (zwischen 11/13)
- 13.4: Betätigungsende
- 14: Verbindungselement, insbesondere Bowdenzug oder dergleichen
- 14.1: Pfeil für Bewegungsrichtung von 14
- 15: Sperreinheit
- 15.1: Wirkspitze
- 15.2: Pfeil für Bewegungsrichtung von 15
- 16: Aktivierungselement
- 17: Antrieb
- 17.1: Antriebsstange

- 20: Griffteil
- 21: erstes Teil
- 21.1: Drehpunkt von 21
- 21.2: Feder (zwischen 11/21)
- 22: zweites Teil / Bedienteil
- 22.1: Drehpunkt von 22
- 22.2: hebeiförmiger Ansatz
- 22.3: Hauptteil von 22
- 22.4: Führungsnocken / Mitnehmer (nockenförmig)
- 22.5: Feder (zwischen 21/22)
- 22.6: Elektronikeinheit
- 22.7: Blende (z. B. Leuchtmittel)
- 70: bewegliches Teil
- 71: Außenseite
- 80: Schließvorrichtung für 70

### Griffteil :

- Ia: Ruhestellung
- Ib: erste Betriebstellung (Bereitschaftsstellung)
- Ic: zweite Betriebsstellung (Betätigungsstellung)

### Sperreinheit:

- IIa: Arretierungslage
- IIb: Freigabelage

## Patentansprüche

1. Griffvorrichtung (10) für eine Schließvorrichtung (80) für ein bewegliches Teil (70), wie eine Tür, Klappe oder dergleichen, eines Fahrzeuges mit einem Griffteil (20), das zu dem beweglichen Teil (70) beweglich gelagert ist, wobei die Schließvorrichtung über ein Verbindungselement (14) mit dem Griffteil (20) verbindbar ist und das Griffteil (20) zur Betätigung der Schließvorrichtung (80) dient, wobei das Griffteil (20) zumindest zweiteilig aufgebaut ist, wobei ein erstes Teil (21) direkt oder indirekt an dem beweglichen Teil (70) gelagert ist und ein zweites Teil (22) beweglich an dem ersten Teil (21) angeordnet ist, welches eine Bedienteil (22) zur Bedienung der Griffvorrichtung (10) bildet, wobei das Griffteil (20) zwei zueinander relativ bewegliche Teile aufweist, wobei das zweite Teil (22) einen Drehpunkt (22.1) mit dem ersten Teil (21) aufweist, und ein Mitnehmer (22.4) vorhanden ist, womit das zweite Teil (22) mechanisch auf das Verbindungselement (14) einwirkt, **dadurch gekennzeichnet, dass** das erste und zweite Teil (21, 22) des Griffteils (20) mit einer Feder (21.2, 22.5) beaufschlagt ist, wobei die Feder (22.5) zwischen dem ersten und zweiten Teil (21, 22) des Griffteils (20) angeordnet ist.

2. Griffvorrichtung (10) nach Anspruch 1,
**dadurch gekennzeichnet,**
**dass** das erste Teil (21) des Griffteils (20) über eine Griffhalterung (11) an dem beweglichen Teil (70) gelagert ist, und insbesondere einen Drehpunkt (21.1) und/oder eine Führung zur Griffhalterung (11) aufweist.

3. Griffvorrichtung (10) nach einem der vorhergehenden Ansprüche,
**dadurch gekennzeichnet,**
**dass** ein Betätigungselement (13) zwischen dem Verbindungselement (14) und dem zweiten Teil (22) des Griffteils (20) angeordnet ist, wobei insbesondere der Mitnehmer (22.4) vom zweiten Teil (22) mechanisch auf das Betätigungselement (13) wirkt und/oder das Betätigungselement (13) durch eine Feder (13.3) belastet ist.

4. Griffvorrichtung (10) nach einem der vorhergehenden Ansprüche,
**dadurch gekennzeichnet,**
**dass** das Griffteil (20) zumindest eine Ruhestellung (la) und eine Betriebsstellung (Ib) aufweist,
wobei das Griffteil (20) am beweglichen Teil (70) in der Ruhestellung (la) an einem ersten Anschlag (11.1) lagert und insbesondere mit seinem zweiten Teil (22), dem Bedienteil (22), im Wesentlichen flächenbündig zu einer Außenseite (71) des beweglichen Teils (70) angeordnet ist, und
wobei das Griffteil (20) in der Betriebsstellung (Ib) mit seinem zweiten Teil (22) aus der Außenseite (71) des beweglichen Teils (70) ragt, und das bewegliche Teil (70) durch eine Betätigung der Schließvorrichtung (80) bewegbar ist.

5. Griffvorrichtung (10) nach einem der vorhergehenden Ansprüche,
**dadurch gekennzeichnet,**
**dass** das Griffteil (20) zumindest zwei Betriebsstellungen (Ib, Ic) aufweist, wobei in einer ersten Betriebsstellung (Ib) das zweite Teil (22) insbesondere parallel zur Außenseite (71) des beweglichen Teils (70) steht, und wobei das zweite Teil (22) in einer zweiten Betriebsstellung (Ic) insbesondere schräg zur Außenseite (71) des beweglichen Teils (70) steht, in der auf das Verbindungselement (14) einwirkbar ist und/oder dass eine, insbesondere U-förmige oder einseitige, Führung (12) an der Griffhalterung (11) für das Griffteil (20) vorgesehen ist, die mit einem Führungsnocken (22.4) am zweiten Teil (22) mechanisch zusammenwirkt, womit das zweite Teil (22) beim Wechsel zwischen der Ruhestellung (Ia) und der Betriebsstellung (Ib, Ic) relativ zum ersten Teil (21) bewegbar ist.

6. Griffvorrichtung (10) nach einem der vorhergehenden Ansprüche,
**dadurch gekennzeichnet,**
**dass** das Betätigungselement (13) an der Griffhalterung (11), insbesondere an der Führung (12) für das zweite Teil (22) des Griffteils (20), gelagert ist, und
**dass** insbesondere der Mitnehmer (22.4) vom zweiten Teil (22) des Griffteils (20) über das Betätigungselement (13) auf das Verbindungselement (14) wirkt, wobei insbesondere das Betätigungselement (13) hebelartig ausgestaltet ist.

7. Griffvorrichtung (10) nach einem der vorhergehenden Ansprüche,
**dadurch gekennzeichnet,**
**dass** ein Aktivierungselement (16) vorgesehen ist, womit das Griffteil (20) mechanisch oder elektromechanisch von seiner Ruhestellung (la) in seine Betriebsstellung (Ib) überführbar ist und/oder
**dass** ein Antrieb (17) für das Griffteil (20) vorgesehen ist, womit dieses automatisch zwischen der Ruhestellung (la) und der Betriebsstellung (Ib) bewegbar ist, wobei insbesondere der Antrieb (17) über das Aktivierungselement (16) ansteuerbar ist.

8. Griffvorrichtung (10) nach einem der vorhergehenden Ansprüche,
**dadurch gekennzeichnet,**
**dass** eine Sperreinheit (15) vorhanden ist, wodurch das Griffteil (20) in der Ruhestellung (la) blockiert ist, und wobei die Sperreinheit (15) insbesondere über das Aktivierungselement (16) betätigbar ist.

9. Griffvorrichtung (10) nach einem der vorhergehenden Ansprüche,
**dadurch gekennzeichnet,**
**dass** im Griffteil (20) eine Elektronikeinheit (22.6) vorgesehen ist, die insbesondere mit einem Sicherheitssystem am Fahrzeug verbindbar ist und/oder insbesondere eine Leuchtmittel aufweist.

10. Verfahren zum Betätigen einer Griffvorrichtung (10) für eine Schließvorrichtung (80) für ein bewegliches Teil (70), wie eine Tür, Klappe oder dergleichen, eines Fahrzeuges mit einem Griffteil (20), das zu dem beweglichen Teil (70) beweglich gelagert ist, wobei die Schließvorrichtung (70) über ein Verbindungselement (20) mit dem Griffteil (20) verbunden ist und das Griffteil (20) zur Betätigung der Schließvorrichtung (80) dient, und das Griffteil (20) zumindest eine Ruhestellung (la) und eine Betriebsstellung (Ib) aufweist, wobei das Griffteil (20) mit seinem Bedienteil (22) in der Ruhestellung (Ia) im Wesentlichen flächenbündig zu einer Außenseite (71) des beweglichen Teils (70) angeordnet ist und in die Betriebsstellung (Ib) überführt wird, wenn eine Aktivierung der Griffvorrichtung (10) erfolgt, wobei das Griffteil (20) in der Betriebsstellung (Ib) mit dem Bedienteil (22) aus der Außenseite (71) des beweglichen Teils (70) ragt, wobei das Bedienteil (21) bei einem Wechsel zwischen der Ruhestellung (la) und der Betriebsstellung (Ib) im Wesentlichen parallel zur Außenseite (71) des beweglichen Teils (70) geführt wird, wobei das Griffteil (20) zumindest zweiteilig aufgebaut ist, wobei das Griffteil (20) zwei zueinander relativ bewegliche Teile aufweist, wobei das zweite Teil (22) einen Drehpunkt (22.1) mit dem ersten Teil (21) aufweist, und ein Mitnehmer (22.4) vorhanden ist, womit das zweite Teil (22) mechanisch auf das Verbindungselement (14) einwirkt, **dadurch gekennzeichnet, dass** das erste und zweite Teil (21, 22) des Griffteils (20) mit einer Feder (21.2, 22.5) beaufschlagt ist, wobei die Feder (22.5) zwischen dem ersten und zweiten Teil (21, 22) des Griffteils (20) angeordnet ist.

11. Verfahren nach Anspruch 10,
**dadurch gekennzeichnet,**
**dass** ein erstes Teil (21) direkt oder indirekt an dem beweglichen Teil (21) gelagert ist und ein zweites Teil (22) beweglich an dem ersten Teil (21) angeordnet ist, welches das Bedienteil (22) zur Bedienung der Griffvorrichtung (10) bildet, und
**dass** bei einem Wechsel zwischen der Ruhestellung (la) und der Betriebsstellung (Ib) beide Teile (21, 22) flexibel voneinander bewegt werden.

12. Verfahren nach Anspruch 10 oder 11,
**dadurch gekennzeichnet,**
**dass** das erste Teil (21) des Griffteils (20) über eine Griffhalterung (11) an dem beweglichen Teil (70) gelagert ist und einen Drehpunkt (21.1) zur Griffhalterung (11) aufweist und
**dass** eine Führung (12) für das Bedienteil (22) vorgesehen ist, die insbesondere an der Griffhalterung (11) angeordnet ist, wobei die Führung (12) bei einem Wechsel zwischen der Ruhestellung (la) und der Betriebsstellung (Ib) die Bewegung des Bedienteils vorgibt.

13. Verfahren nach einem der Ansprüche 10 bis 12,
**dadurch gekennzeichnet,**
**dass** das Griffteil (20) zumindest zwei Betriebsstellungen (Ib, Ic) aufweist, wobei in einer ersten Betriebsstellung (Ib) das Bedienteil (22) parallel zur Außenseite (71) des beweglichen Teils (70) steht, und wobei das Bedienteil (22) in einer zweiten Betriebsstellung (Ic) schräg zur Außenseite (71) des beweglichen Teils (70) steht, in der auf das Verbindungselement (14) eingewirkt wird, und
**dass** insbesondere bei einem Wechsel zwischen der ersten Betriebsstellung (Ib) und der zweiten Betriebsstellung (Ic) nur das Bedienteil (22) bewegt wird.

14. Verfahren nach einem der Ansprüche 10 bis 13,
**dadurch gekennzeichnet,**
**dass** die Griffvorrichtung (10) gemäß der Ansprüche 1 bis 9 zur Durchführung des erfindungsgemäßen Verfahrens geeignet ist.

## Claims

1. Handle device (10) for a closing device (80) for a movable part (70), such as a door, flap or the like, of a vehicle
with a handle part (20) which is mounted so as to be movable relative to the movable part (70),
the closing device being connectable to the handle part (20) via a connecting element (14) and the handle part (20) serving to actuate the closing device (80),
wherein the handle part (20) is constructed in at least two parts, wherein a first part (21) is mounted directly or indirectly on the movable part (70) and a second part (22) is movably arranged on the first part (21), which forms an operating part (22) for operating the handle device (10),
wherein the handle part (20) has two parts which are movable relative to each other, wherein the second part (22) comprises a pivot point (22.1) with the first part (21), and a driver (22.4) is present, whereby the second part (22) acts mechanically on the connecting element (14),
**characterized in that**
the first and second parts (21, 22) of the handle part (20) are acted upon by a spring (21.2, 22.5)
wherein the spring (22.5) is arranged between the first and second parts (21, 22) of the handle part (20).

2. Handle device (10) according to claim 1,
**characterized in that**
the first part (21) of the handle part (20) is mounted on the movable part (70) via a handle holder (11),
and in particular has a pivot point (21.1) and/or a guide to the handle holder (11).

3. Handle device (10) according to any one of the preceding claims,
**characterized in that**
an actuating element (13) is arranged between the connecting element (14) and the second part (22) of the handle part (20),
wherein in particular the driver (22.4) of the second part (22) acts mechanically on the actuating element (13) and/or the actuating element (13) is loaded by a spring (13.3).

4. Handle device (10) according to any one of the preceding claims,
**characterized in that**
the handle part (20) has at least one rest position (Ia) and one operating position (Ib), wherein the handle part (20) is mounted on the movable part (70) in the rest position (Ia) on a first stop (11.1) and in particular is arranged with its second part (22), the operating part (22), substantially flush with an outer side (71) of the movable part (70), and wherein the handle part (20) in the operating position (Ib) projects with its second part (22) from the outside (71) of the movable part (70), and the movable part (70) is movable by actuation of the closing device (80).

5. Handle device (10) according to any one of the preceding claims,
**characterized in that**
the handle part (20) has at least two operating positions (Ib, Ic),
wherein in a first operating position (Ib) the second part (22) is in particular parallel to the outside (71) of the movable part (70), and
the second part (22) being in a second operating position (Ic), in particular oblique to the outside (71) of the movable part (70), in which position it can act on the connecting element (14) and/or
**in that** a guide (12), in particular a U-shaped or one-sided guide (12), is provided on the handle mounting (11) for the handle part (20), which guide (12) interacts mechanically with a guide cam (22.4) on the second part (22), whereby the second part (22) can be moved relative to the first part (21) when changing between the rest position (Ia) and the operating position (Ib, Ic).

6. Handle device (10) according to any one of the preceding claims,
**characterized in that**
the actuating element (13) is mounted on the handle holder (11), in particular on the guide (12) for the second part (22) of the handle part (20), and
in particular the driver (22.4) acts from the second part (22) of the handle part (20) via the actuating element (13) on the connecting element (14),
wherein in particular the actuating element (13) is designed lever-like.

7. Handle device (10) according to any one of the preceding claims,
**characterized in that**
an activation element (16) is provided, by means of which the handle part (20) can be transferred mechanically or electromechanically from its rest position (Ia) into its operating position (Ib), and/or
**in that** a drive (17) is provided for the handle part (20), whereby the latter can be moved automatically between the rest position (Ia) and the operating position (Ib),
wherein in particular the drive (17) can be controlled via the activation element (16).

8. Handle device (10) according to any one of the preceding claims,
**characterized in that**
a locking unit (15) is present, whereby the handle part (20) is blocked in the rest position (Ia), and wherein the locking unit (15) can be actuated in particular via the activation element (16).

9. Handle device (10) according to any one of the preceding claims,
**characterized in that**
an electronic unit (22.6) is provided in the handle part (20), which electronic unit (22.6) can be connected in particular to a safety system on the vehicle and/or in particular has a fight source.

10. Method for actuating a handle device (10) for a closing device (80) for a movable part (70), such as a door, flap or the like, of a vehicle
with a handle part (20) which is mounted so as to be movable relative to the movable part (70),
wherein the closing device (80) is connected to the handle part (20) via a connecting element (14) and the handle part (20) serves to actuate the closing device (80), and
the handle part (20) has at least one rest position (Ia) and one operating position (Ib), wherein the handle part (20) with its operating part (22) in the rest position (Ia) is arranged substantially flush with an outer side (71) of the movable part (70) and is transferred into the operating position (Ib) when the handle device (10) is activated,
wherein the handle part (20) in the operating position (Ib) projects with the operating part (22) from the outer side (71) of the movable part (70),
wherein the operating part (21) is guided substantially parallel to the outside (71) of the movable part (70) when changing between the rest position (Ia) and the operating position (Ib),
wherein the handle part (20) is constructed in at least two parts,
wherein the handle part (20) has two parts which are movable relative to each other,
wherein the second part (22) comprises a pivot point (22.1) with the first part (21), and a driver (22.4) is comprised, whereby the second part (22) acts mechanically on the connecting element (14),
**characterized in that**
the first and second parts (21, 22) of the handle part (20) are acted upon by a spring (21.2, 22.5)
wherein the spring (22.5) is arranged between the first and second parts (21, 22) of the handle part (20).

11. Method according to claim 10,
**characterized in that**
a first part (21) is mounted directly or indirectly on the movable part (70) and a second part (22) is arranged movably on the first part (21), which forms the operating part (22) for operating the handle device (10), and
**in that** both parts (21, 22) are moved flexibly from one another when changing between the rest position (Ia) and the operating position (Ib).

12. Method according to claim 10 or 11,
**characterized in that**
the first part (21) of the handle part (20) is mounted on the movable part (70) via a handle holder (11) and has a pivot point (21.1) for the handle holder (11), and
**in that** a guide (12) is provided for the operating part (22), which guide is arranged in particular on the handle holder (11).
wherein the guide (12) predetermines the movement of the operating part when changing between the rest position (Ia) and the operating position (lb).

13. Method according to one of the claims 10 to 12,
**characterized in that**
the handle part (20) has at least two operating positions (Ib, Ic),
wherein in a first operating position (Ib) the operating part (22) is parallel to the outside (71) of the movable part (70), and
wherein the operating part (22) is inclined in a second operating position (Ic) obliquely to the outside (71) of the movable part (70), in which the connecting element (14) is acted upon, and
**in that**, in particular when changing between the first operating position (Ib) and the second operating position (Ic), only the operating part (22) is moved.

14. Method according to one of the claims 10 to 13,
**characterized in that**
the handle device (10) according to claims 1 to 9 is suitable for carrying out the method according to the invention.

## Revendications

1. Dispositif de poignée (10) pour un dispositif de fermeture (80) pour une partie mobile (70), telle qu'une porte, un volet ou similaire, d'un véhicule
avec une partie de poignée (20) qui est montée de manière à pouvoir être déplacée par rapport à la partie mobile (70),
le dispositif de fermeture pouvant être relié à la partie de poignée (20) par un élément de liaison (14) et la partie de poignée (20) servant à actionner le dispositif de fermeture (80),
la partie de poignée (20) est réalisée en au moins deux parties, une première partie (21) étant montée directement ou indirectement sur la partie mobile (70) et une deuxième partie (22) étant disposée de manière mobile sur la première partie (21), qui forme une partie d'actionnement (22) pour l'actionnement du dispositif de poignée (10),
dans lequel la partie de poignée (20) comporte deux parties qui sont mobiles l'une par rapport à l'autre,
dans lequel la deuxième partie (22) prévue un point de pivotement (22.1) avec la première partie (21), et un entraîneur (22.4) est prévue, la deuxième partie (22) agissant mécaniquement sur l'élément de liaison (14),
**caractérisé en ce**
**que** les première et deuxième parties (21, 22) de la partie poignée (20) sont sollicitées par un ressort (21.2, 22.5)
dans lequel le ressort (22.5) est disposé entre la première et la deuxième partie (21, 22) de la partie de poignée (20).

2. Dispositif de poignée (10) selon la revendication 1,
**caractérisé en ce**
**que** la première partie (21) de la partie de poignée (20) est montée sur la partie mobile (70) par l'intermédiaire d'un support de poignée (11),
et prévue en particulier un point de pivotement (21.1) et/ou un guidage vers le support de poignée (11).

3. Dispositif de poignée (10) selon l'une des revendications précédentes,
**caractérisé en ce**
**qu'**un élément d'actionnement (13) est disposé entre l'élément de liaison (14) et la deuxième partie (22) de la partie de poignée (20),
dans lequel en particulier l'entraîneur (22.4) de la deuxième partie (22) agit mécaniquement sur l'élément d'actionnement (13) et/ou l'élément d'actionnement (13) est sollicité par un ressort (13.3).

4. Dispositif de poignée (10) selon l'une des revendications précédentes,
**caractérisé en ce**
**que** la partie poignée (20) prévue au moins une position de repos (la) et une position de fonctionnement (Ib),
dans lequel la partie de poignée (20) est montée sur la partie mobile (70) dans la position de repos (la) sur une première butée (11.1) et est en particulier disposée avec sa deuxième partie (22), la partie d'actionnement (22), sensiblement à fleur d'un côté extérieur (71) de la partie mobile (70), et
dans lequel la partie de poignée (20) en position de fonctionnement (Ib) dépasse avec sa deuxième partie (22) du côté extérieur (71) de la partie mobile (70), et la partie mobile (70) est mobile par actionnement du dispositif de fermeture (80).

5. Dispositif de poignée (10) selon l'une des revendications précédentes,
**caractérisé en ce**
**que** la partie poignée (20) comprend au moins deux positions de fonctionnement (Ib, Ic), dans lequel, dans une première position de fonctionnement (Ib), la deuxième partie (22) est en particulier parallèle au côté extérieur (71) de la partie mobile (70), et
la deuxième partie (22) se trouvant dans une deuxième position de fonctionnement (Ic), en particulier oblique par rapport au côté extérieur (71) de la partie mobile (70), dans laquelle position elle peut agir sur l'élément de liaison (14) et/ou en ce qu'un guidage (12), en particulier un guidage (12) en forme de U ou unilatéral, est prévu sur le support de poignée (11) pour la partie de poignée (20), lequel guidage (12) coopère mécaniquement avec une came de guidage (22.4) sur la deuxième partie (22), la deuxième partie (22) pouvant être déplacée par rapport à la première partie (21) lors du changement entre la position de repos (la) et la position de fonctionnement (Ib, Ic).

6. Dispositif de poignée (10) selon l'une des revendications précédentes,
**caractérisé en ce**
**que** l'élément d'actionnement (13) est monté sur le support de poignée (11), en particulier sur le guidage (12) pour la deuxième partie (22) de la partie de poignée (20), et
en particulier l'entraîneur (22.4) agit à partir de la deuxième partie (22) de la partie de poignée (20) par l'intermédiaire de l'élément d'actionnement (13) sur l'élément de liaison (14),
l'élément d'actionnement (13) étant en particulier réalisé sous forme de levier.

7. Dispositif de poignée (10) selon l'une des revendications précédentes,
**caractérisé en ce**
**qu'**il est prévu un élément d'actionnement (16) au moyen duquel la partie de poignée (20) peut être transférée mécaniquement ou électromécaniquement de sa position de repos (la) dans sa position de fonctionnement (Ib), et/ou
en ce qu'un entraînement (17) est prévu pour la partie de poignée (20), cette dernière pouvant être déplacée automatiquement entre la position de repos (la) et la position de fonctionnement (Ib),
l'entraînement (17) pouvant notamment être commandé par l'intermédiaire de l'élément d'actionnement (16).

8. Dispositif de poignée (10) selon l'une des revendications précédentes,
**caractérisé en ce**
**qu'**une unité de verrouillage (15) est prévue, la partie de poignée (20) étant bloquée dans la position de repos (la), et dans lequel l'unité de verrouillage (15) peut être actionnée en particulier par l'intermédiaire de l'élément d'actionnement (16).

9. Dispositif de poignée (10) selon l'une des revendications précédentes,
**caractérisé en ce**
**qu'**une unité électronique (22.6) est prévue dans la partie poignée (20), laquelle unité électronique (22.6) peut être reliée en particulier à un système de sécurité sur le véhicule et/ou prévue en particulier un moyen lumineux.

10. Procédé d'actionnement d'un dispositif de poignée (10) pour un dispositif de fermeture (80) d'une partie mobile (70), telle qu'une porte, un volet ou similaire, d'un véhicule avec une partie de poignée (20) qui est montée de manière à pouvoir être déplacée par rapport à la partie mobile (70),
dans lequel le dispositif de fermeture (80) est relié à la partie de poignée (20) par un élément de liaison (14) et la partie de poignée (20) sert à actionner le dispositif de fermeture (80), et
la partie poignée (20) prévue au moins une position de repos (Ia) et une position de fonctionnement (Ib),
dans lequel la partie de poignée (20) avec sa partie d'actionnement (22) en position de repos (la) est disposée sensiblement à fleur d'un côté extérieur (71) de la partie mobile (70) et est transférée dans la position d'actionnement (Ib) lorsque le dispositif de poignée (10) est activé, dans lequel la partie de poignée (20) en position de fonctionnement (Ib) dépasse avec la partie d'actionnement (22) du côté extérieur (71) de la partie mobile (70),
dans lequel la partie d'actionnement (21) est guidée sensiblement parallèlement au côté extérieur (71) de la partie mobile (70) lors du changement entre la position de repos (la) et la position de fonctionnement (Ib),
dans lequel la partie poignée (20) est construite en au moins deux parties,
dans lequel la partie de poignée (20) comporte deux parties qui sont mobiles l'une par rapport à l'autre,
dans lequel la deuxième partie (22) prévue un point de pivotement (22.1) avec la première partie (21), et un entraîneur (22.4) est prévue, la deuxième partie (22) agissant mécaniquement sur l'élément de liaison (14),
**caractérisé en ce**
**que** les première et deuxième parties (21, 22) de la partie poignée (20) sont sollicitées par un ressort (21.2, 22.5)
dans lequel le ressort (22.5) est disposé entre la première et la deuxième partie (21, 22) de la partie de poignée (20).

11. Procédé selon la revendication 10,
**caractérisé en ce**
**qu'**une première partie (21) est montée directement ou indirectement sur la partie mobile (70) et une deuxième partie (22) est disposée de manière mobile sur la première partie (21), qui forme la partie d'actionnement (22) pour actionner le dispositif de poignée (10), et
en ce que les deux parties (21, 22) sont déplacées de manière flexible l'une par rapport à l'autre lors du passage de la position de repos (la) à la position de fonctionnement (Ib).

12. Procédé selon la revendication 10 ou 11,
**caractérisé en ce**
**que** la première partie (21) de la partie de poignée (20) est montée sur la partie mobile (70) par l'intermédiaire d'un support de poignée (11) et prévue un point de pivotement (21.1) pour le support de poignée (11), et
en ce qu'il est prévu un guidage (12) pour la partie d'actionnement (22), qui est disposé en particulier sur le support de poignée (11),
dans lequel le guidage (12) prédétermine le mouvement de la partie d'actionnement lors du changement entre la position de repos (Ia) et la position de fonctionnement (Ib).

13. Procédé selon l'une des revendications 10 à 12,
**caractérisé en ce**
**que** la partie poignée (20) comprend au moins deux positions de fonctionnement (Ib, Ic), dans lequel, dans une première position de fonctionnement (Ib), la partie d'actionnement (22) est parallèle au côté extérieur (71) de la partie mobile (70), et
dans lequel la partie d'actionnement (22) est incliné dans une deuxième position de fonctionnement (Ic) obliquement vers le côté extérieur (71) de la partie mobile (70), dans laquelle l'élément de liaison (14) est sollicité, et
en ce que, notamment lors du passage entre la première position de fonctionnement (Ib) et la deuxième position de fonctionnement (Ic), seul la partie d'actionnement (22) est déplacé.

14. Procédé selon l'une des revendications 10 à 13,
**caractérisé en ce**
**que** le dispositif de poignée (10) selon les revendications 1 à 9 est approprié pour la mise en oeuvre du procédé selon l'invention.
